# EUROPEAN PATENT SPECIFICATION

(11) **EP 3 715 409 B1**
(45) Date of publication and mention of the grant of the patent: **06.10.2021**
(21) Application number: 18881469.3
(22) Date of filing: 13.11.2018
(51) Int. Cl.: C08C 19/20, C08L 11/00, C08L 15/00, C08K 5/38, C08K 5/47, C08L 11/02, C08F 36/18, C08F 136/18

(54) **SULFUR-MODIFIED CHLOROPRENE RUBBER COMPOSITION, VULCANIZED PRODUCT, MOLDED ARTICLE USING SAID VULCANIZED PRODUCT AND METHOD FOR PRODUCING SULFUR-MODIFIED CHLOROPRENE RUBBER COMPOSITION**
SCHWEFELMODIFIZIERTE CHLOROPRENKAUTSCHUKZUSAMMENSETZUNG, VULKANISAT, FORMKÖRPER MIT DIESEM VULKANISAT UND VERFAHREN ZUR HERSTELLUNG EINER SCHWEFELMODIFIZIERTEN CHLOROPRENKAUTSCHUKZUSAMMENSETZUNG
COMPOSITION DE CAOUTCHOUC CHLOROPRÈNE MODIFIÉ PAR DU SOUFRE, PRODUIT VULCANISÉ, ARTICLE MOULÉ UTILISANT LEDIT PRODUIT VULCANISÉ ET PROCÉDÉ DE PRODUCTION DE COMPOSITION DE CAOUTCHOUC CHLOROPRÈNE MODIFIÉ PAR DU SOUFRE

(30) Priority: 24.11.2017 JP 2017225937
(43) Date of publication of application: 30.09.2020
(73) Proprietor: Denka Company Limited, Tokyo 103-8338 (JP)
(72) Inventor: KONDO Atsunori, Itoigawa-city Niigata 949-0393 (JP); KOBAYASHI Naoki, Itoigawa-city Niigata 949-0393 (JP); ABE Yasushi, Itoigawa-city Niigata 949-0393 (JP)
(74) Representative: Hoffmann Eitle
(86) International application number: PCT/JP2018/041921
(87) International publication number: WO 2019/102898

(56) References cited:
- EP-A1- 2 837 478
- EP-A1- 2 980 148
- EP-A1- 3 075 747
- WO-A1-2015/145691
- GB-A- 1 414 393
- JP-A- H 093 120
- JP-A- H 093 120
- JP-A- 2008 195 870
- JP-A- 2011 001 528
- JP-A- 2016 141 736
- US-A- 3 920 623
- US-A- 5 187 232
- US-A- 5 483 006

## Description

### Background Art

Sulfur-modified chloroprene rubber has been widely used as materials of common industrial transmission belts and conveyer belts, air springs for cars, rubber vibration isolators, sponge products and the like with its excellent dynamic characteristics utilized. A problem of these products is that, since these products deform and return repeatedly by dynamic stress, rubber itself generates heat and deteriorates, or the product lives are shortened. Thus, the development of sulfur-modified chloroprene rubber in which the heat build-up is reduced has been earnestly desired.

As a technique for reducing the heat build-up of rubber, a low exothermic rubber composition is known which contains an elastomer which can be crosslinked by an organic peroxide-based crosslinking agent such as an acrylonitrile-butadiene copolymer rubber; a metal salt of an α,β-ethylenic unsaturated carboxylic acid; magnesium oxide having a BET specific surface area of 25 m²/g or less; and an organic peroxide-based crosslinking agent (refer to Patent Literature 1). A rubber composition is also known in which a specific low exothermic carbon black is incorporated into a rubber component (refer to Patent Literature 2). A modified conjugate diene polymer is also known obtained by mixing a (A) component having a high molecular weight and predetermined properties and a (B) component having a low molecular weight and predetermined properties (refer to Patent Literature 3).

Meanwhile, the development of sulfur-modified chloroprene rubber which is excellent in permanent compression set and abrasion resistance has also been earnestly desired. As a technique for improving the permanent compression set of rubber, for example, a chloroprene rubber composition is disclosed in Patent Literature 4 wherein the chloroprene rubber composition is obtained by vulcanizing a chloroprene rubber composition containing a total of 100 parts by mass of chloroprene rubber and natural rubber, 0.1 to 10 parts by mass of a copolymer of styrene and butadiene, 0.1 to 3.0 parts by mass of ethylene thiourea, and 0.1 to 3.0 parts by mass of dipentamethylenethiuramtetrasulfide after forming or at the time of forming to obtain a vulcanized product; the permanent compression set is good; and the chloroprene rubber composition is excellent also in mechanical strength. A technique for improving also the abrasion resistance of rubber is described in the above-mentioned Patent Literature 3.

### Citation List

### Patent Literature

Patent Literature 1: JP H9-268239 A
Patent Literature 2: JP H10-13 0424 A
Patent Literature 3: JP 2010-121086 A
Patent Literature 4: JP 2012-111899 A

EP 2 837 478 relates to a vulcanizate of a chloroprene rubber composition containing carbon black to produce products generating a smaller amount of heat during use. JP-H09-3120 relates to a sulfur-modified chloroprene polymer having a predetermined Mooney viscosity and which does not form a nitrosamine compound showing mutagenicity. GB 1 414 393 and US 3,920,623 relate to sulfur-modified chloroprene polymers with sulfonamide modification, having improved flex resistance and tear strength after aging. US 5,483,006 relates to processes for curing chloroprene/sulfur copolymers which do not form nitrosamines. US 5,187,232 relates to compositions containing polychloroprene and hydrogenated nitrile rubber to form vulcanizates with improved modulus and dynamic stress absorption capacity.

EP 2 980 148 relates to a blended rubber with gives a vulcanizate superior in abrasion resistance and ozone resistance. The blended rubber comprises a chloroprene rubber, a soft polyvinyl chloride and an acrylonitrile-butadiene rubber. EP 3 075 747 relates to a sulfur-modified polychloroprene that generates a smaller amount of nitrosamine compounds during kneading or curing operation.

### Summary of Invention

### Technical Problem

As mentioned above, as to sulfur-modified chloroprene rubber, a technique for improving physical properties thereof is being developed. However, a technique for making sulfur-modified chloroprene rubber excellent in the permanent compression set or abrasion resistance and reducing the heat build-up at the same time did not exist in the past.

Therefore, a main object of the present technique is to provide a technique for manufacturing a sulfur-modified chloroprene rubber wherein the sulfur-modified chloroprene rubber is excellent in the permanent compression set and abrasion resistance, and the heat build-up is reduced.

### Solution to Problem

The present inventors have earnestly investigated techniques for manufacturing sulfur-modified chloroprene rubbers earnestly to solve such a problem, consequently succeeded in manufacturing a sulfur-modified chloroprene rubber wherein the sulfur-modified chloroprene rubber is excellent in the permanent compression set and abrasion resistance, and the heat build-up is reduced using sulfenamide as a plasticizer, and completed the present technique.

That is, the present technique first provides a sulfur-modified chloroprene rubber composition wherein, in a sulfur-modified chloroprene polymer latex comprising at least a sulfur-modified chloroprene polymer, 2-chloro-1,3-butadiene and an emulsifier, the polymer is modified with 0.2 to 3.0 parts by mass of a sulfenamide optionally having a substituent and 0.3 to 6.0 parts by mass of a xanthogen disulfide optionally having a substituent based on 100 parts by mass of the polymer in the sulfur-modified chloroprene polymer latex.

A sulfenamide represented by the following chemical formula (1) can be used for the sulfenamide which the sulfur-modified chloroprene rubber composition according to the present technique contains.

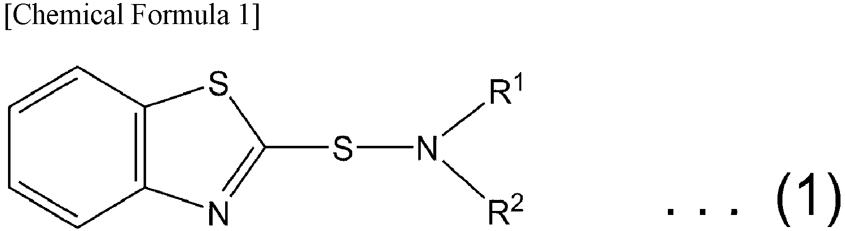

In chemical formula (1), R¹ and R² each independently represent hydrogen or an alkyl group having 1 to 10 carbon atoms. R¹ and R² may be the same or different.

A xanthogen disulfide represented by the following chemical formula (2) can be used as the xanthogen disulfide. 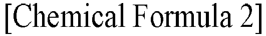 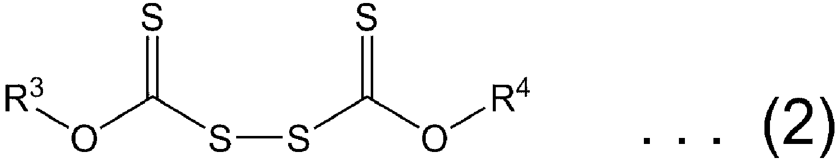 In chemical formula (2), R³ and R⁴ each independently represent an alkyl group having 1 to 4 carbon atoms. R³ and R⁴ may be the same or different.

The Mooney viscosity of the sulfur-modified chloroprene rubber can be adjusted to 20 to 80.

The present technique further provides a vulcanized product obtained by vulcanizing the sulfur-modified chloroprene rubber composition according to the present technique and a formed article thereof.

Examples of the formed article according to the present technique include a transmission belt, a conveyer belt, a rubber vibration isolator, an air spring, a hose product or a sponge product.

The present technique additionally provides a method for producing a sulfur-modified chloroprene rubber composition, comprising:
a polymerizing step of emulsion polymerizing at least 2-chloro-1,3-butadiene and sulfur to obtain a polymerization liquid; and
a plasticizing step of adding a sulfenamide optionally having a substituent , 2-chloro-1,3-butanediene, and a xanthogen disulfide optionally having a substituent to the polymerization liquid to plasticize a polymer in the polymerization liquid.

### Advantageous Effects of Invention

According to the present technique, a sulfur-modified chloroprene rubber wherein the sulfur-modified chloroprene rubber is excellent in the permanent compression set and abrasion resistance, and the heat build-up is reduced can be obtained.

### Description of Embodiments

Preferred embodiments for implementing the present technique will be described hereinafter. The embodiments described below show examples of typical embodiments of the present technique, and the scope of the present technique is not interpreted narrowly thereby.

A sulfur-modified chloroprene rubber composition according to the present technique includes a composition (1) in a latex state obtained by plasticizing a sulfur-modified chloroprene polymer wherein sulfur is introduced into the main chain by emulsion polymerizing 2-chloro-1,3-butadiene (hereinafter also called "chloroprene") alone, or chloroprene and another monomer in the presence of sulfur with a sulfenamide optionally having a substituent and a composition (2) in a crude rubber state obtained by drying and washing this latex by a common method. A process for producing a sulfur-modified chloroprene rubber composition will be described in detail hereinafter.

### [Polymerizing step]

In the method for producing a sulfur-modified chloroprene rubber composition according to the present technique, the polymerizing step of emulsion polymerizing at least 2-chloro-1,3-butadiene and sulfur to obtain a polymerization liquid is first performed.

Examples of the monomer which can be copolymerized with chloroprene include 2,3-dichloro-1,3-butadiene, 1-chloro-1,3-butadiene, styrene, acrylonitrile, methacrylonitrile, isoprene, butadiene, methacrylic acid and esters thereof. When these monomers which can be copolymerized with chloroprene, the monomers can be used as long as the characteristics of the obtained sulfur-modified chloroprene rubber are not deteriorated. It is preferable to adjust the used amount of the monomer which can be copolymerized with chloroprene to 10% by mass or less of all the monomers from this viewpoint. When the used amount of this monomer is more than 10% by mass, the heat resistance of the obtained sulfur-modified chloroprene rubber may not be able to be improved, and the processing characteristics of the obtained sulfur-modified chloroprene rubber may also decrease. These monomers which can be copolymerized may be used alone or in combination of two or more.

When 2,3-dichloro-1,3-butadiene is used among these monomers which can be copolymerized, the crystallization rate of the obtained sulfur-modified chloroprene rubber can be slowed. The sulfur-modified chloroprene rubber with a slow crystallization rate can maintain rubber elasticity even under low-temperature conditions. For example, the low-temperature permanent compression set can be improved by copolymerizing the monomer which enables to slow the crystallization rate of the obtained sulfur-modified chloroprene rubber with chloroprene.

At the time of the emulsion polymerization, it is preferable that the amount of sulfur (S₈) added be 0.01 to 0.6 parts by mass, and it is more preferable that the amount be 0.1 to 0.5 parts by mass based on a total of 100 parts by mass of the monomer to be polymerized. When the amount of sulfur (S₈) is less than 0.01 parts by mass, the mechanical characteristic or the dynamic characteristic of the obtained sulfur-modified chloroprene rubber composition may not be obtained. Meanwhile, when the amount of sulfur (S₈) is more than 0.6 parts by mass, the adhesiveness of the obtained sulfur-modified chloroprene rubber composition to metal is so strong that the composition may not be able to be processed.

As long as the effect of the present technique is not deteriorated, the emulsifier to be used for an emulsion polymerization is not particularly limited, and one or two or more well-known emulsifiers and fatty acids which can be used for the emulsion polymerization of chloroprene can be selected freely and used. Examples of the emulsifier include rosin acids, metal salts of aromatic sulfonic acid-formalin condensates, sodium dodecylbenzenesulfonate, potassium dodecylbenzenesulfonate, sodium alkyl diphenyl ether sulfonate, potassium alkyl diphenyl ether sulfonate, sodium polyoxyethylene alkyl ether sulfonate, sodium polyoxypropylene alkyl ether sulfonate, potassium polyoxyethylene alkyl ether sulfonate, and potassium polyoxypropylene alkyl ether sulfonate. It is preferable to use especially rosin acids among these. The rosin acids mentioned here mean rosin acid, disproportionated rosin acid, alkali metal salts of disproportionated rosin acid, compounds thereof or the like. An emulsifier used preferably is an alkaline aqueous soap solution consisting of a mixture of an alkali metal salt of disproportionated rosin acid and a saturated or unsaturated fatty acid having 6 to 22 carbon atoms. Examples of components of the disproportionated rosin acid include sesquiterpenes, 8,5-isopimaric acid, dihydropimaric acid, secodehydroabietic acid, dihydroabietic acid, deisopropyldehydroabietic acid, and demethyldehydroabietic acid.

It is desirable that the pH of the aqueous emulsified liquid at the time of the emulsion polymerization start be 10.5 or more. Here, although the aqueous emulsified liquid refers to a mixed liquid of the chloroprene monomer and the monomer which can be copolymerized with chloroprene, the emulsifier, sulfur (S₈) or the like directly before the emulsion polymerization start, the aqueous emulsified liquid also includes the case where its composition changes by the post-addition or the divided addition of these monomers, sulfur (S₈) and the like. When rosin acids are used as an emulsifier, polymer deposition during the polymerization and the like are prevented, and the polymerization can be controlled stably by adjusting the pH to 10.5 or more. To adjust the pH of the aqueous emulsified liquid, the amount of alkali components such as sodium hydroxide and potassium hydroxide existing at the time of the emulsion polymerization is adjusted suitably.

The polymerization temperature of the emulsion polymerization is 0 to 55°C, and preferably 30 to 55°C from the viewpoints of polymerization controllability and productivity.

As a polymerization initiator, potassium persulfate, benzoyl peroxide, ammonium persulfate, hydrogen peroxide or the like which is used in usual radical polymerization can be used. The polymerization is performed in the polymerization rate range of 60 to 95%, preferably 70 to 90%, and a polymerization inhibitor is subsequently added to stop the polymerization.

It is preferable that the polymerization rate be 60% or more from the aspect of productivity. It is preferable that the polymerization rate be 95% or less from the viewpoint of suppressing the development of branched structure and the production of gel which affect the processability of the obtained sulfur-modified chloroprene rubber. Examples of the polymerization inhibitor of the polymer include thiodiphenylamine, 4-tert-butylcatechol and 2,2'-methylene-bis-4-methyl-6-tert-butylphenol. The polymerization inhibitor may be used alone or in combination of two or more.

### [Plasticizing step]

The plasticizing step is a step of adding the sulfenamide optionally having a substituent to the polymerization liquid obtained in the polymerizing step, and plasticizing the polymer in the polymerization liquid with this sulfenamide.

As to the type of the sulfenamide to be added, as long as the effect of the present technique is not deteriorated, one or two or more well-known sulfenamides can be freely used. It is preferable to use especially the sulfenamide represented by the chemical formula (1) in the present technique.

The amount of the sulfenamide added is 0.2 to 3.0 parts by mass based on 100 parts by mass of the polymer in the polymerization liquid. The abrasion resistance of the vulcanized product can be improved, and the permanent compression set and the heat build-up can be reduced by adjusting the amount of sulfenamide added to 0.2 parts by mass or more. A crude rubber having a moderate Mooney viscosity can be obtained, and the vulcanization formability can be consequently improved by adjusting the amount of the sulfenamide added to 3.0 parts by mass or less.

A xanthogen disulfide optionally having a substituent is also be used in the plasticizing step. It is easy to control the Mooney viscosity of the crude rubber, and the balance among the abrasion resistance, the permanent compression set and the heat build-up of the obtained vulcanized product is good using the xanthogen disulfide. As to the type of the xanthogen disulfide to be added, as long as the effect of the present technique is not deteriorated, one or two or more well-known xanthogen disulfides can be freely used. It is preferable to use especially the xanthogen disulfide represented by the chemical formula (2) in the present technique.

When the xanthogen disulfide is used, the amount thereof added is 0.3 to 6.0 parts by mass based on 100 parts by mass of the polymer in the polymerization liquid in the present technique. With the amount of the xanthogen disulfide added adjusted to the above-described range, the control of the Mooney viscosity of the crude rubber is still easier, the abrasion resistance of the obtained vulcanized product improves further, and the permanent compression set and the heat build-up are reduced further.

It is preferable to adjust the ratio of the amount of the xanthogen disulfide added (b) to the amount of the sulfenamide added (a), (b/a), to 0.2 to 30.0. With the ratio (b/a) between the amounts added adjusted to the above-described range, the balance among the abrasion resistance, the permanent compression set and the heat build-up of the vulcanized product is still better.

The sulfur-modified chloroprene polymer latex (composition (1)) subjected to the plasticizing step is subjected to cooling, pH adjustment, freezing, drying and the like by a common method to obtain a crude rubber (composition (2)). The obtained crude rubber (composition (2)) is characterized by comprising 0.0005 to 0.01 parts by mass of the sulfenamide optionally having a substituent based on 100 parts by mass of the sulfur-modified chloroprene rubber. With the content of the sulfenamide adjusted to the above-described range, the abrasion resistance of the vulcanized product improves, and this contributes to reduction in the permanent compression set and heat build-up.

When the xanthogen disulfide optionally having a substituent is used in the plasticizing step, the content of the xanthogen disulfide existing in the obtained crude rubber (composition (2)) is not particularly limited. Since 0.3 to 6.0 parts by mass of the xanthogen disulfide is added to 100 parts by mass of the polymer in the polymerization liquid in the plasticizing step, the obtained crude rubber (composition (2)) contains 0.1 to 1.5 parts by mass based on 100 parts by mass of the sulfur-modified chloroprene rubber. With the content of the xanthogen disulfide adjusted to the above-described range, the abrasion resistance of the obtained vulcanized product improves further, and this contributes to further reduction in the permanent compression set and heat build-up.

It is preferable that the ratio of the content of the xanthogen disulfide (B) to the content of the sulfenamide (A), (B/A), be 20 to 2000. With the ratio (B/A) between the contents adjusted to the above-described range, the physical property balance among the abrasion resistance, the permanent compression set and the heat build-up of the obtained vulcanized product is still better.

Although the Mooney viscosity of the sulfur-modified chloroprene rubber is not particularly limited, it is preferable to adjust the Mooney viscosity to the range of 20 to 80. With the Mooney viscosity of the sulfur-modified chloroprene rubber adjusted to the above-described range, the processability of the obtained sulfur-modified chloroprene rubber can be maintained.

A small amount of a stabilizer can also be incorporated into the sulfur-modified chloroprene rubber composition to prevent the Mooney viscosity from changing at the time of storage. The type of the stabilizer which can be used for the present technique is not particularly limited as long as the effect of the present technique is not deteriorated, and one or two or more known stabilizers capable of being used for chloroprene rubber can be freely selected and used. Examples of the stabilizer include phenyl-α-naphthylamine, octylated diphenylamine, 2,6-di-tert-butyl-4-phenylphenol, 2,2'-methylene-bis(4-methyl-6-tert-butylphenol), and 4,4'-thiobis-(6-tert-butyl-3-methylphenol). Among these stabilizers, 4,4'-thiobis-(6-tert-butyl-3-methylphenol) is preferable.

### [Vulcanized product and formed article]

The above-obtained crude rubber (composition (2)) may be mixed with a metallic compound, a plasticizer and a filler with rolls, a Banbury mixer, an extruder or the like, the mixture may be then formed into a desired shape and vulcanized, or made into a vulcanized product and then formed, to obtain a formed article such as a transmission belt, a conveyer belt, a hose, a rubber vibration isolator, an air spring, a hose product or a sponge product.

The metallic compound is added for adjusting the vulcanization rate of the sulfur-modified chloroprene rubber composition and adsorbing the sources of chlorine such as hydrogen chloride produced by the dehydrochlorination reaction of the sulfur-modified chloroprene rubber composition to suppress the deterioration of the sulfur-modified chloroprene rubber composition. As the metallic compound, for example, oxides and hydroxides of zinc, titanium, magnesium, lead, iron, beryllium, calcium, barium, germanium, zirconium, vanadium, molybdenum, tungsten and the like can be used. These metallic compounds may be used alone or in combination of two or more.

Although the amount of the metallic compound is not particularly limited, the range of 3 to 15 parts by mass is preferable based on 100 parts by mass of the sulfur-modified chloroprene rubber. With the amount of the metallic compound added adjusted to this range, the mechanical strength of the obtained sulfur-modified chloroprene rubber composition can be improved.

The plasticizer is added for reducing the hardness of the sulfur-modified chloroprene rubber composition and improving its low-temperature characteristics. When a sponge is manufactured using the sulfur-modified chloroprene rubber composition, the texture can also be improved. Examples of the plasticizer include dioctylphthalate, dioctyl adipate {bis(2-ethylhexyl)adipate}, white oil, silicone oil, naphthene oil, aroma oil, triphenyl phosphate and tricresyl phosphate. These plasticizers may be used alone or in combination of two or more.

Although the amount of the plasticizer added is not particularly limited, the range of 50 parts by mass or less is preferable based on 100 parts by mass of the sulfur-modified chloroprene rubber. The above-mentioned effect can be exhibited by adjusting the amount of the plasticizer added to this range while the tear strength of the obtained sulfur-modified chloroprene rubber composition is maintained.

The filler is added as a reinforcing material of the sulfur-modified chloroprene rubber composition. Examples of the filler include carbon black, silica, clay, talc and calcium carbonate. These fillers may be used alone or in combination of two or more.

Although the amount of the filler added is not particularly limited, the range of 100 parts by mass or less is preferable based on 100 parts by mass of the sulfur-modified chloroprene rubber. The above-mentioned effect can be exhibited by adjusting the amount of the filler added to this range while the forming processability of the sulfur-modified chloroprene rubber composition is maintained.

### Examples

The present technique will be described further in detail hereinafter based on the Examples. The Examples described below show examples of typical Examples of the present technique, and the scope of the present technique is not narrowly interpreted thereby.

### [Manufacturing of sulfur-modified chloroprene rubber]

### <Example 1>

(1) 100 parts by mass of a chloroprene monomer, 0.55 parts by mass of sulfur, 120 parts by mass of pure water, 4.00 parts by mass of potassium disproportionated rosinate (produced by Harima Chemicals Group, Inc.), 0.60 parts by mass of sodium hydroxide, and 0.6 parts by mass of a sodium salt of β-naphthalene sulfonic acid-formalin condensate (trade name DEMOL N: produced by Kao Corporation) were added to a polymerization can having a capacity of 30 liters. The pH of the aqueous emulsifier before the polymerization start was 12.8. Then, 0.1 parts by mass potassium persulfate was added as a polymerization initiator, and the polymerization was performed at a polymerization temperature of 40°C under a nitrogen stream. When the degree of conversion is 85%, diethylhydroxyamine which was a polymerization terminator was added, and the polymerization was stopped to obtain a polymerization liquid after the end of polymerization.

(2) A plasticizer emulsified liquid containing of 3.0 parts by mass of a chloroprene monomer as a solvent; 1.5 parts by mass of N-cyclohexylbenzothiazole-2-sulfenamide (trade name "NOCCELER CZ" produced by OUCHI SHINKO CHEMICAL INDUSTRIAL CO., LTD.) and 3.2 parts by mass of diisopropyl xanthogen disulfide (trade name "Sanbit DIX" produced by SANSHIN CHEMICAL INDUSTRY CO., LTD.) as plasticizers; 0.05 parts by mass of a sodium salt of a β-naphthalene sulfonic acid-formalin condensate as a dispersant: and 0.05 parts by mass of sodium lauryl sulfate as an emulsifier was added to the polymerization liquid after the end of polymerization obtained in the above-mentioned step (1) to obtain sulfur-modified chloroprene polymer latex before the plasticization.

Here, the sodium salt of the β-naphthalene sulfonic acid formalin condensate is a dispersant used for many purposes, the stability improves, and the latex can be produced stably without aggregation or deposition in the production process by adding a small amount. In the present Example, the plasticizer was added to the polymerization liquid after the emulsion polymerization, and a liquid prepared in an emulsified state by adding sodium lauryl sulfate to the plasticizer liquid in which the plasticizer was dissolved in chloroprene added as a solvent was added to enable more stable plasticization at that time.

(3) Subsequently, the sulfur-modified chloroprene polymer latex obtained in the step (2) was distilled at reduced pressure to remove the unreacted monomer, and the plasticization was performed with stirring with the temperature maintained at 50°C for 1 hour to obtain latex after plasticization (this latex after plasticization is abbreviated as "latex" hereinafter).

(4) Then, the latex was cooled, the polymer was isolated by a freezing-solidifying method which was a conventional method to obtain a sulfur-modified chloroprene rubber (crude rubber).

### <Examples 2 to 13 and Comparative Examples 1 to 4>

Sulfur-modified chloroprene rubbers (crude rubbers) were obtained in the same method as in Example 1 by the compounding shown in the following Tables 1 and 2.

Materials used in the present Examples are as follows. N-tert-Butylbenzothiazole-2-sulfenamide: (trade name "SANCELER NS-G" produced by SANSHIN CHEMICAL INDUSTRY CO., LTD.) Diethyl xanthogen disulfide: (produced by Sigma-Aldrich Co. LLC) Tetraethylthiuram disulfide: (trade name "NOCCELER TET" produced by OUCHI SHINKO CHEMICAL INDUSTRIAL CO., LTD.)

### [Analysis of content of plasticizers (compounds represented by chemical formula (1) and chemical formula (2))]

The contents of the compounds represented by chemical formula (1) and chemical formula (2) in a sulfur-modified chloroprene rubber were quantified in the following procedure.

First, 1.5 g of the obtained sulfur-modified polychloroprene rubber was dissolved in 30 ml of benzene, 60 ml of methanol was dropped, the rubber composition was deposited and separated from the solvent, and the non-rubber content was collected as a solvent-soluble component. The deposited polymer content was subjected to dissolution in benzene and methanol dropping again in the same procedure, the rubber component was separated, the non-rubber content was collected as a solvent-soluble component in the same way, the first and second solvents were mixed and diluted to a constant volume of 200 ml, and this was used as a sample for measurement. Then, 20 µL of the sample for measurement was injected into a liquid chromatograph (LC manufactured by Hitachi, Ltd. pump: L-6200, L-600 UV detector: L-4250). The mobile phase of the LC was used while the ratio of acetonitrile to water was changed, and the mobile phase was made to flow at a flow rate of 1 ml/min. An Inertsil ODS-3 (4.6 in diameter × 150 mm 5 µm GL Sciences Inc.) was used for the column. The peak detection times of a sulfenamide (measured wavelength: 300 nm) and a xanthogen disulfide (measured wavelength: 280 nm) were confirmed with standard solutions, and the quantitative values were calculated by calibration curves calculated from the peak areas thereof. The contents of chemical formulae (1) and (2) were calculated by comparing these quantitative values with the amount of sample used for analysis.

### [Measurement of Mooney viscosity]

As to each of the above-obtained sulfur-modified chloroprene rubbers (crude rubbers) of the Examples 1 to 13 and the Comparative Examples 1 to 4, the Mooney viscosity was measured in accordance with JIS K 6300-1 for a preheating time of a L type rotor of 1 minute and a rotation time of 4 minutes at a test temperature of 100°C.

### [Manufacturing of sample for evaluation]

First, 1 part by mass of stearic acid, 2.0 parts by mass of octylated diphenylamine, 4.0 parts by mass of magnesium oxide, 40 parts by mass of carbon black (GPF) and 5.0 parts by mass of zinc oxide were mixed with 100 parts by mass of each of the above-obtained sulfur-modified chloroprene rubbers (crude rubbers) of the Examples 1 to 13 and the Comparative Examples 1 to 4 using 8-inch rolls, and the press crosslinking was performed at 160°C for 20 minutes to manufacture a sample for evaluation.

### [Measurement of permanent compression set]

Each of the samples produced above was measured in accordance with JIS K 6262 under test conditions of 100°C and 72 hours.

### [Evaluation of abrasion resistance]

Each of the samples produced above was subjected to a DIN abrasion test in accordance with JIS K 6264-2.

### [Heat build-up]

The heat build-up was evaluated with a Goodrich flexometer (JIS K 6265). The Goodrich flexometer is a test method of applying dynamic repeated loads to a specimen such as vulcanized rubber and evaluating the fatigue characteristic due to heat generation in the specimen; and specifically applies a static initial load to the specimen under a constant temperature condition, further applies sinusoidal vibrations with a constant amplitude, and measures the exothermic temperature and the creep amount of the specimen which changes with the passage of time. The test method was in accordance with JIS K 6265, the calorific value (ΔT) was measured under the conditions of 50°C, a strain of 0.175 inches, a load of 55 pounds, and 1,800 vibrations per minute.

### [Result]

The results of the Examples are shown in the following Table 1, and the results of the Comparative Examples are shown in the following Table 2.

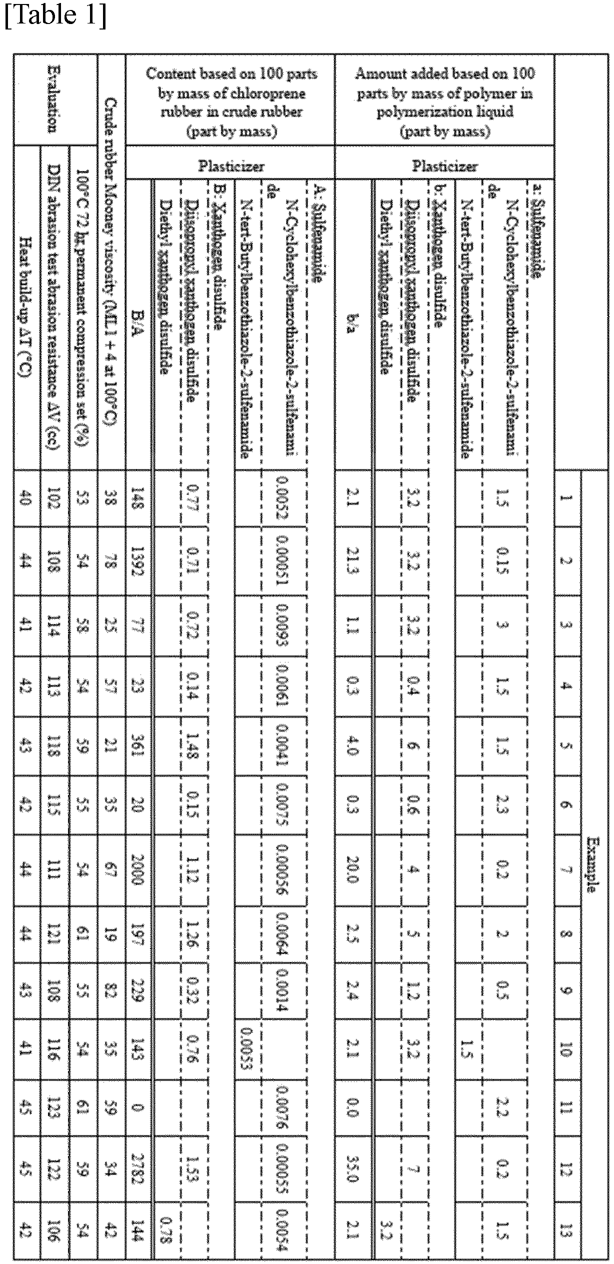

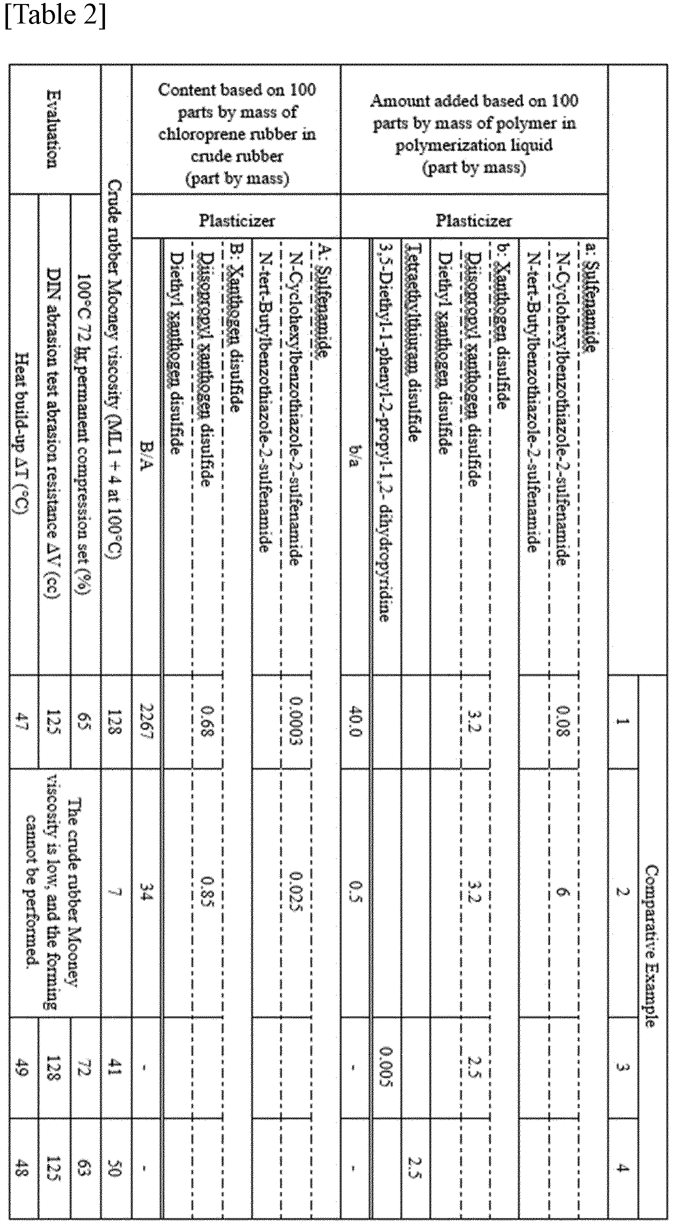

### [Consideration]

As shown in Tables 1 and 2, it was confirmed that the Examples 1 to 13 were excellent in the permanent compression set or abrasion resistance, and the heat build-up was reduced as compared with Comparative Examples 1, 3 and 4. Even though the sulfenamide was used, as to Comparative Example 2, in which the content thereof in the crude rubber is more than 0.01 parts by mass, the Mooney viscosity was too low to manufacture an evaluation sample.

When Examples were compared, Example 4, in which the content of the xanthogen disulfide was 0.1 parts by mass or more, and Example 6, in which the ratio of the content of the xanthogen disulfide (B) to the content of the sulfenamide (A), (B/A), was 20 or more, were excellent in abrasion resistance, and the permanent compression set and the heat build-up were reduced as compared with Example 11, in which a xanthogen disulfide was not used.

Example 7, in which the ratio (B/A) was 2000 or less, was excellent in abrasion resistance, and the permanent compression set was reduced as compared with Example 12, in which the ratio of the content of the xanthogen disulfide (B) to the content of the sulfenamide (A), (B/A), was more than 2000.

## Claims

1. A sulfur-modified chloroprene rubber composition,
wherein, in a sulfur-modified chloroprene polymer latex comprising at least a sulfur-modified chloroprene polymer, 2-chloro-1,3-butadiene and an emulsifier, the polymer is modified with 0.2 to 3.0 parts by mass of a sulfenamide optionally having a substituent and 0.3 to 6.0 parts by mass of a xanthogen disulfide optionally having a substituent based on 100 parts by mass of the polymer in the sulfur-modified chloroprene polymer latex.

2. The sulfur-modified chloroprene rubber composition according to claim 1, wherein the sulfenamide is represented by the following chemical formula (1): 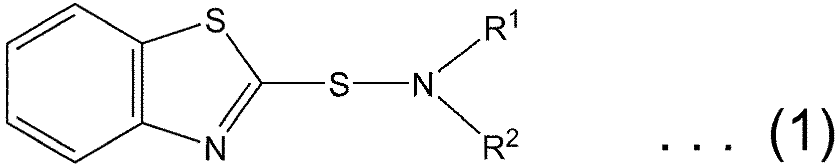 wherein R¹ and R² each independently represent hydrogen or an alkyl group having 1 to 10 carbon atoms, and R¹ and R² may be the same or different.

3. The sulfur-modified chloroprene rubber composition according to claim 1 or 2, wherein the xanthogen disulfide is represented by the following chemical formula (2): 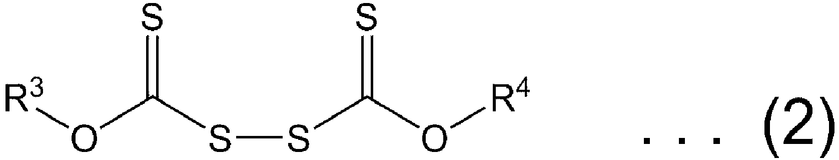 wherein R³ and R⁴ each independently represent an alkyl group having 1 to 4 carbon atoms, and R³ and R⁴ may be the same or different.

4. The sulfur-modified chloroprene rubber composition according to any one of claims 1 to 3, wherein a Mooney viscosity of the sulfur-modified chloroprene rubber is 20 to 80.

5. A vulcanized product, made of the sulfur-modified chloroprene rubber composition according to any one of claims 1 to 3.

6. A formed article, made of the vulcanized product according to claim 5.

7. The formed article according to claim 6, wherein the formed article is a transmission belt, a conveyer belt, a rubber vibration isolator, an air spring, a hose product or a sponge product.

8. A method for producing a sulfur-modified chloroprene rubber composition, comprising:
a polymerizing step of emulsion polymerizing at least 2-chloro-1,3-butadiene and sulfur to obtain a polymerization liquid; and
a plasticizing step of adding a sulfenamide optionally having a substituent, 2-chloro-1,3-butanediene, and a xanthogen disulfide optionally having a substituent to the polymerization liquid to plasticize a polymer in the polymerization liquid.

## Patentansprüche

1. Schwefelmodifizierte Chloroprenkautschukzusammensetzung,
wobei in einem schwefelmodifizierten Chloroprenpolymerlatex, der mindestens ein schwefelmodifiziertes Chloroprenpolymer, 2-Chlor-1,3-butadien und einen Emulgator umfasst, das Polymer bezogen auf 100 Massenteile des Polymers in dem schwefelmodifizierten Chloroprenpolymerlatex mit 0,2 bis 3,0 Massenteilen eines Sulfenamids, das gegebenenfalls einen Substituenten aufweist, und 0,3 bis 6,0 Massenteilen eines Xanthogendisulfids modifiziert ist, das gegebenenfalls einen Substituenten aufweist.

2. Schwefelmodifizierte Chloroprenkautschukzusammensetzung nach Anspruch 1, wobei das Sulfenamid durch die folgende chemische Formel (1) repräsentiert wird: 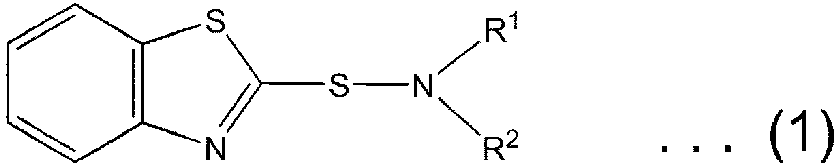 wobei R¹ und R² jeweils unabhängig Wasserstoff oder eine Alkylgruppe mit 1 bis 10 Kohlenstoffatomen repräsentieren und R¹ und R² gleich oder verschieden sein können.

3. Schwefelmodifizierte Chloroprenkautschukzusammensetzung nach Anspruch 1 oder 2, wobei das Xanthogendisulfid durch die folgende chemische Formel (2) repräsentiert wird: 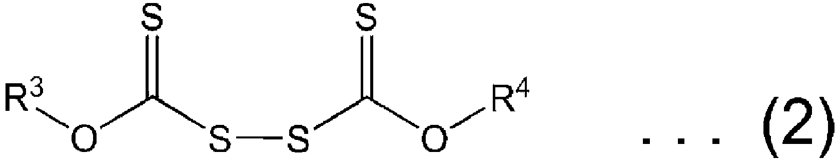 wobei R³ und R⁴ jeweils unabhängig eine Alkylgruppe mit 1 bis 4 Kohlenstoffatomen repräsentieren und R³ und R⁴ gleich oder verschieden sein können.

4. Schwefelmodifizierte Chloroprenkautschukzusammensetzung nach einem der Ansprüche 1 bis 3, wobei eine Mooney-Viskosität des schwefelmodifizierten Chloroprenkautschuks 20 bis 80 beträgt.

5. Vulkanisiertes Produkt, hergestellt aus der schwefelmodifizierten Chloroprenkautschukzusammensetzung nach einem der Ansprüche 1 bis 3.

6. Formteil, hergestellt aus dem vulkanisierten Produkt nach Anspruch 5.

7. Formteil nach Anspruch 6, wobei das Formteil ein Treibriemen, ein Förderband, ein Kautschukschwingungsdämpfer, ein Luftfederbalg, ein Schlauchprodukt oder ein Schwammprodukt ist.

8. Verfahren zum Produzieren einer schwefelmodifizierten Chloroprenkautschukzusammensetzung, umfassend:
einen Polymerisationsschritt des Emulsionspolymerisierens von mindestens 2-Chlor-1,3-butadien und Schwefel, um eine Polymerisationsflüssigkeit zu erhalten; und
einen Plastifizierungsschritt des Zugebens eines Sulfenamids, das gegebenenfalls einen Substituenten aufweist, von 2-Chlor-1,3-butadien und eines Xanthogendisulfids, das gegebenenfalls einen Substituenten aufweist, zu der Polymerisationsflüssigkeit, um ein Polymer in der Polymerisationsflüssigkeit zu plastifizieren.

## Revendications

1. Composition de caoutchouc chloroprène modifié par du soufre,
dans laquelle, dans un latex de polymère de chloroprène modifié par du soufre comprenant au moins un polymère de chloroprène modifié par du soufre, du 2-chloro-1,3-butadiène et un émulsifiant, le polymère est modifié avec 0,2 à 3,0 parties en masse d'un sulfénamide présentant facultativement un substituant et 0,3 à 6,0 parties en masse d'un disulfure xanthogène présentant facultativement un substituant sur la base de 100 parties en masse du polymère dans le latex de polymère de chloroprène modifié par du soufre.

2. Composition de caoutchouc chloroprène modifié par du soufre selon la revendication 1, dans laquelle le sulfénamide est représenté par la formule chimique (1) suivante : 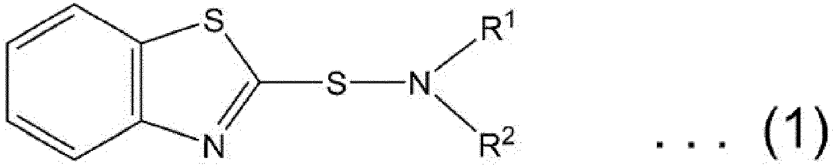 dans laquelle R¹ et R² représentent chacun indépendamment un hydrogène ou un groupe alkyle présentant 1 à 10 atomes de carbone, et R¹ et R² peuvent être identiques ou différents.

3. Composition de caoutchouc chloroprène modifié par du soufre selon la revendication 1 ou 2, dans laquelle le disulfure xanthogène est représenté par la formule chimique (2) suivante : 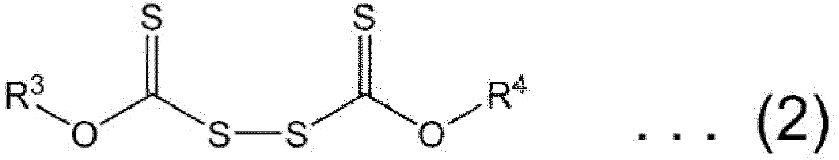 dans laquelle R³ et R⁴ représentent chacun indépendamment un groupe alkyle présentant 1 à 4 atomes de carbone, et R³ et R⁴ peuvent être identiques ou différents.

4. Composition de caoutchouc chloroprène modifié par du soufre selon l'une quelconque des revendications 1 à 3, dans laquelle une viscosité Mooney du caoutchouc chloroprène modifié par du soufre est de 20 à 80.

5. Produit vulcanisé, fait de la composition de caoutchouc chloroprène modifié par du soufre selon l'une quelconque des revendications 1 à 3.

6. Article formé, fait du produit vulcanisé selon la revendication 5.

7. Article formé selon la revendication 6, dans lequel l'article formé est une courroie de transmission, une courroie transporteuse, un isolateur de vibrations en caoutchouc, un ressort pneumatique, un produit de tuyau ou un produit spongieux.

8. Procédé de production d'une composition de caoutchouc chloroprène modifié par du soufre, comprenant :
une étape de polymérisation consistant à polymériser en émulsion au moins du 2-chloro-1,3-butadiène et du soufre pour obtenir un liquide de polymérisation ; et
une étape de plastification consistant à ajouter un sulfénamide présentant facultativement un substituant, du 2-chloro-1,3-butadiène, et un disulfure xanthogène présentant facultativement un substituant au liquide de polymérisation pour plastifier un polymère dans le liquide de polymérisation.
